# EUROPÄISCHE PATENTSCHRIFT

(11) **EP 2 348 277 B1**
(45) Veröffentlichungstag und Bekanntmachung des Hinweises auf die Patenterteilung: **09.05.2012**
(21) Anmeldenummer: 10014727.1
(22) Anmeldetag: 18.11.2010
(51) Int. Cl.: H01C 10/16, G01B 7/30, G01R 17/20

(54) **Potentiometer mit Hauptstellbereich und Sonderfunktionsbereich und Steuerung / Auswertung hierzu**
Potentiometer with main adjusting range and special function range and control/evaluation for same
Potentiomètre doté d'une zone de réglage principale et d'une zone de fonction spéciale et commande / évaluation correspondantes

(30) Priorität: 13.01.2010 DE 102010004638
(43) Veröffentlichungstag der Anmeldung: 27.07.2011
(73) Patentinhaber: ABB AG, 68309 Mannheim (DE)
(72) Erfinder: Blomberg, Lothar, Dipl.-Ing., 59757 Arnsberg (DE)

(56) Entgegenhaltungen:
- EP-A1- 0 635 700
- DE-A1-102006 055 789
- US-A- 2 782 408

## Beschreibung

Die Erfindung betrifft ein Potentiometer mit Hauptstellbereich und Sonderfunktionsbereich sowie eine Steuerung / Auswertung hierzu.

Potentiometer sind aus US-A-2,782,408 und DE 102006055789A1 bekannt: Beim technischen Gebiet elektrischer Schalt- und Steuergeräte werden Potentiometer oder Trimmer als Vorgabeeinheit für die Verstellung von Weg- oder Winkelstrecken oder für andere physikalische Größen genutzt. Wie allgemein bekannt, werden hierzu die Potentiometer oder Trimmer häufig als Spannungsteiler eingesetzt, was das Vorhandensein von drei Anschlüssen am Potentiometer voraussetzt: Widerstandsbahn-Anfangsposition, Widerstandsbahn-Endposition und Schleiferkontakt. Anfangsposition und Endposition des Potentiometers oder Trimmers werden dabei mit einer Gleichspannungsquelle verbunden. Hierdurch kann am Schleiferkontakt eine der Schleiferstellung proportionale Spannung gegen einen Bezugspunkt, dem Massepotential, abgegriffen und einer elektronischen Auswerteeinheit zugeführt werden. Diese kann beispielsweise aus einem Analog-Digital-Wandler, der in einem Mikrocontroller integriert ist, bestehen.

Der Vorteil eines derartigen Spannungsteilers besteht darin, dass unter Nutzung des gesamten Schleifer-Stellwinkels die Anfangsposition und Endposition erreicht wird, wodurch eindeutige logische Pegel "Low" und "High" für die Auswerteeinheit zur Verfügung stehen. Die Toleranz des Gesamtwiderstandes der Widerstandsbahn geht dabei in den Signalverlauf am Schleiferkontakt nicht ein, was vorteilhaft den Einsatz von Potentiometern mit üblicher Toleranz, beispielsweise +/-20%, ermöglicht.

Besteht die Anforderung, dass ein als Spannungsteiler arbeitendes Potentiometer neben einem Hauptstellbereich darüber hinaus einen Stellbereich (Sonderstellung) des Schleiferkontaktes zur Vorgabe mindestens einer Sonderfunktion enthalten soll, kann ein solcher Bereich prinzipiell zugeordnet werden. Allerdings wird dann in der Regel einer der beiden logischen Pegel "Low" oder "High" dieser Sonderfunktion zugeordnet, so dass zur optimalen Darstellung und Auswertung des eigentlichen Hauptstellbereiches einer der beiden eindeutigen Pegel "Low" oder "High" fehlt.

Um den Hauptstellbereich dennoch grundsätzlich darstellen zu können, kann der fehlende logische Pegel "Low" oder "High" z. B. durch einen ohmschen Wert danebenliegend ersetzt werden. Die Schleiferstellung des Schleiferkontakts muss dabei von der Endstellung soweit entfernt sein, dass sie sich bereits auf der Widerstandsbahn befindet und eine deutliche Differenzierung gegenüber der Endposition zulässt. Die dabei entstehende Spannung am Schleiferkontakt ist wiederum toleranzbehaftet und wird durch Faktoren wie beispielsweise Alterung zusätzlich beeinflusst.

Sofern höhere Ansprüche an die Genauigkeit und Reproduzierbarkeit des Hauptstellbereiches gestellt werden, ist eine solche Ausführung problematisch; insbesondere dann, wenn die durch die Sonderfunktion definierte Position in Form von Referenzfahrten mit genutzt werden muss.

Um den Ansprüchen einer höheren Genauigkeit des Hauptstellbereiches und einer eindeutigen Zuordnung zur Vorgabe einer Sonderfunktion gerecht zu werden, kann grundsätzlich ein Potentiometer mit zwei getrennten Widerstandsbahnen zum Einsatz kommen. Dies erfordert allerdings vier Anschlüsse am Potentiometer. Derartige Ausführungen sind relativ teuer, denn sie erfordern in der Regel hohe Werkzeug- und Initialkosten, da die Standardausführungen nur drei Anschlüsse besitzen, wie oben erläutert.

Der Erfindung liegt die Aufgabe zugrunde, ein optimiertes Potentiometer mit Hauptstellbereich und Sonderfunktionsbereich anzugeben.

Des Weiteren soll eine Steuerung / Auswertung zum Potentiometer mit Hauptstellbereich und Sonderfunktionsbereich angegeben werden.

Diese Aufgabe wird hinsichtlich des Potentiometers erfindungsgemäß gelöst durch ein Potentiometer mit zwei örtlich getrennten, intern in Serie geschalteten Widerstandsbahnen,
- wobei die erste Widerstandsbahn einen Hauptstellbereich zur Vorgabe einer Hauptfunktion und die zweite Widerstandsbahn einen Sonderfunktionsbereich respektive einen Stellbereich zur Vorgabe mindestens einer Sonderfunktion bildet,
- wobei der gemeinsame Verbindungspunkt der beiden Widerstandsbahnen eine Widerstands-Anfangsposition und gleichzeitig einen ersten Anschluss des Potentiometers bildet,
- wobei das weitere Ende der ersten Widerstandsbahn eine Widerstands-Endposition und gleichzeitig einen zweiten Anschluss des Potentiometers bildet,
- wobei das weitere Ende der zweiten Widerstandsbahn eine offen liegende, extern nicht zu beschaltende Widerstands-Endposition bildet,
- wobei sowohl der Hauptstellbereich als auch der Sonderfunktionsbereich von einem einen dritten Anschluss des Potentiometers bildenden Schleiferkontakt kontaktiert respektive durchfahrbar sind,
- so dass je nach Schleiferstellung die erste oder die zweite Widerstandsbahn in zwei Widerstandszweige aufteilbar ist.

Diese Aufgabe wird hinsichtlich der Steuerung / Auswertung erfindungsgemäß gelöst durch eine Steuerung / Auswertung zum Potentiometer mit Hauptstellbereich und Sonderfunktionsbereich,
- wobei eine Versorgungsspannung zwischen den ersten und den zweiten Anschluss angelegt ist,
- wobei mittels einer Steuereinheit über eine Diode und einen Vorwiderstand eine kodierte Spannung zwischen dritten und ersten Anschluss angelegt ist und
- wobei eine elektronische Auswerteeinheit die Spannung am Schleiferkontakt gegenüber dem ersten Anschluss sowie die Spannungsveränderungen dieser Spannung erfasst.

Die mit der Erfindung erzielbaren Vorteile bestehen insbesondere darin, dass die Ansprüche hinsichtlich einer höheren Genauigkeit und einer eindeutigen Zuordnung zur Vorgabe einer Sonderfunktion erfüllt werden. Beispielsweise wird bei Anwendung des vorgeschlagenen Potentiometers respektive der vorgeschlagenen Steuerung /Auswertung für eine Steuerung zur Positionierung einer Jalousie bzw. eines Rollladens eine erweiterte Funktionalität respektive ein erweiterter Funktionsbereich dahingehend ermöglicht, dass mit ein und demselben Potentiometer
- im Hauptstellbereich zu beliebigen Zeitpunkten die obere Endlage, die untere Endlage und beliebig viele Zwischenpositionen der Jalousie / des Rollladens vorgegeben und unmittelbar angefahren werden können (Absolutlageneinstellung),
- im Sonderfunktionsbereich vorab festgelegte und abgespeicherte Memorywerte für bestimmte Positionen der Jalousie / des Rollladens abgerufen und unmittelbar angefahren werden können (Memoryeinstellung-/steuerung),
- im Sonderfunktionsbereich vorab festgelegte und abgespeicherte Memorywerte für bestimmte Betätigungszeitpunkte (Uhrzeiten) zum Anfahren vorgegebener Positionen der Jalousie / des Rollladens abgerufen werden können (Zeit-/Memoryeinstellung), wobei dann das Anfahren zur vorgegebenen Uhrzeit alle vierundzwanzig Stunden erfolgt.

Der Sonderfunktionsbereich kann sich also auch in mehrere voneinander abweichende Bereiche (Vorgabe von Positionen einerseits und Vorgabe von Betätigungszeiten und Positionen andererseits) aufteilen. Ein besonderer Vorteil ist dadurch gegeben, dass die Absolutlageneinstellung/-steuerung und die Zeit-/Memoryeinstellung respektive Zeit-/Memorysteuerung in einem einzigen Gerät mittels einer einzigen Einstelleinrichtung ermöglicht wird. Die erhöhte Funktionalität wird dabei mit minimiertem Schaltungs- und Kostenaufwand erreicht. Das Potentiometer inklusive Steuereinheit/Auswerteeinheit kann in einer handelsüblichen 60mm-UP-Gerätedosae nach DIN49073 installiert werden, so dass eine Integration in ein Steckdosen-/Schalter-Installationsprogramm mit einheitlichen Abdeckrahmen und einheitlichem Design gegeben ist.

Vorteilhafte Ausgestaltungen der Erfindung sind in den Unteransprüchen gekennzeichnet.

Die Erfindung wird nachstehend an Hand der in der Zeichnung dargestellten Ausführungsbeispiele näher erläutert. Es zeigen:
- Fig. 1: ein prinzipielles Schaltbild eines Potentiometers mit einem Hauptstellbereich und einem Sonderfunktionsbereich respektive Stellbereich zur Vorgabe mindestens einer Sonderfunktion,
- Fig. 2: interessierende Spannungsverläufe im Hauptstellbereich,
- Fig. 3: ein interessierender Spannungsverlauf im Sonderfunktionsbereich,
- Fig. 4: ein interessierender Stromverlauf im Hauptstellbereich,
- Fig. 5: ein interessierender Stromverlauf im Sonderfunktionsbereich,
- Fig. 6: Hauptstellbereich und Sonderfunktionsbereich bei einem in Form eines Dreh- potentiometers ausgeführten Potentiometer.

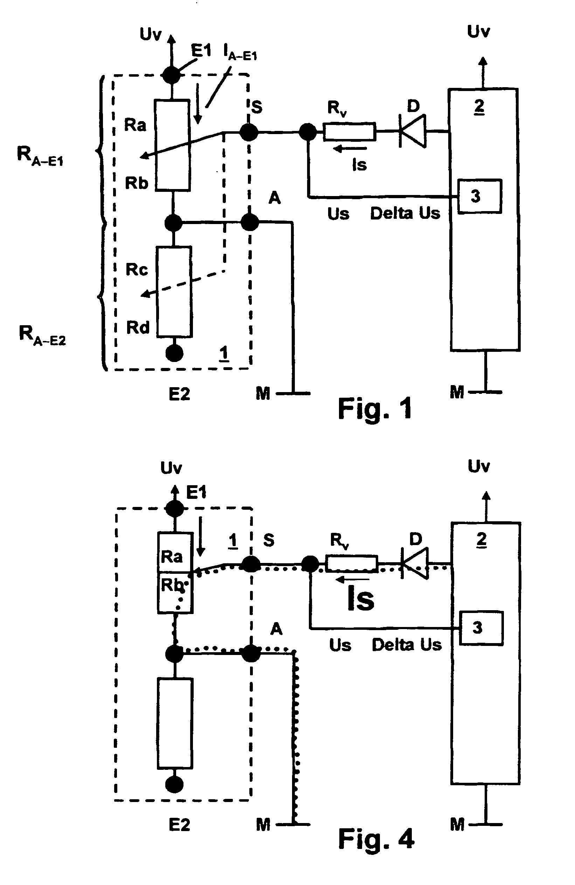

In Fig. 1 ist ein prinzipielles Schaltbild eines Potentiometers mit einem Hauptstellbereich zur Vorgabe einer Hauptfunktion und einem Sonderfunktionsbereich respektive Stellbereich zur Vorgabe mindestens einer Sonderfunktion dargestellt. Es ist ein Potentiometer 1 mit zwei in Serie geschalteten Widerstandsbahnen, nämlich einer ersten Widerstandsbahn R_{A-E1} und einer zweiten Widerstandsbahn R_{A-E2} zu erkennen. Der gemeinsame Verbindungspunkt beider Widerstandsbahnen R_{A-E1} und R_{A-E2} ist mit Widerstandsbahn-Anfangsposition A, die Widerstands-Endposition der ersten Widerstandsbahn R_{A-E1} ist mit E1 sowie die die Widerstands-Endposition der zweiten Widerstandsbahn R_{A-E2} mit E2 bezeichnet. Die Widerstandsbahn R_{A-E1} bildet einen Hauptstellbereich A-E1 zur Vorgabe einer Hauptfunktion, die Widerstandsbahn R_{A-E2} bildet einen Sonderfunktionsbereich A-E2 respektive einen Stellbereich zur Vorgabe mindestens einer Sonderfunktion. Sowohl der Hauptstellbereich als auch der Sonderfunktionsbereich können von einem Schleiferkontakt S kontaktiert respektive "durchfahren" respektive "durchlaufen" werden. Die Widerstandsbahn-Anfangsposition A bildet den ersten Anschluss des Potentiometers 1, die Widerstands-Endposition E1 bildet den zweiten Anschluss des Potentiometers und der Schleiferkontakt S bildet den dritten Anschluss des Potentiometers.

Das Hauptmerkmal der Erfindung ist der Einsatz des Potentiometers 1 mit lediglich drei Anschlüssen E1, A, S wobei zwei örtlich getrennte, intern in Reihe geschaltete Widerstandsbahnen, nämlich
- R_{A-E1} : erste Widerstandsbahn zwischen der Anfangsposition A und der Endposition E1; mit den beiden gegebenenfalls durch die aktuelle Lage des Schleiferkontakts S bestimmten, in Serie liegenden Widerstandszweigen Rₐ und R_{b},
- R_{A-E2} : zweite Widerstandsbahn zwischen der Anfangsposition A und der Endposition E2; mit den beiden gegebenenfalls durch die aktuelle Lage des Schleiferkontakts S bestimmten, in Serie liegenden Widerstandszweigen R_{c} und R_{d}
vorhanden sind und wobei eine Endposition dieser beiden Widerstandsbahnen, im betrachteten Fall beispielsweise die Widerstandsbahn-Endposition E2 der zweiten Widerstandsbahn R_{A-E2}, im Potentiometer 1 offen liegt, d. h. extern nicht beschaltet wird.

Aus dem Potentiometer 1 als Anschlüsse herausgeführt sind somit
- die Widerstandsbahn-Endposition E1 der ersten Widerstandsbahn R_{A-E1},
- die Widerstandsbahn-Anfangsposition A der beiden Widerstandsbahnen R_{A-E1} und R_{A-E2} und
- der Schleiferkontakt S, der vom Rotationswinkel respektive dem Schleifer-Stellwinkel respektive allgemein der Schleiferstellung her beide Widerstandsbahnen, also außer der ersten Widerstandsbahn R_{A-E1} auch die endseitig offen liegende zweite Widerstandsbahn R_{A-E2} kontaktieren kann.

Die Widerstandsbahn-Anfangsposition A bildet gleichzeitig das Massepotential respektive einen Bezugspunkt für die Steuerung / Auswertung, welche durch eine Steuereinheit 2 inklusive elektronischer Auswerteeinheit 3 repräsentiert wird. Das Potentiometer 1 wird zwischen seinen beiden Anschlüssen E1 und M respektive A mit einer Versorgungsspannung Uv (Gleichspannung) beaufschlagt. Es ergibt sich ein stationärer Strom I_{E1-A} zwischen den Anschlüssen E1 und A.

Bei der offen liegenden zweiten Widerstandsbahn R_{A-E2} handelt es sich um einen passiven Zweig, der bei üblicher Potentiometerbeschaltung (Anlegen der Versorgungsspannung Uv) keine Differenzierung hinsichtlich der Ausgangssignale zulassen würde.

Für die Steuerung / Auswertung wird deshalb über einen Vorwiderstand Rᵥ und eine Diode D seitens der ebenfalls mit der Versorgungsspannung Uv beaufschlagten Steuereinheit 2 eine kodierte Spannung Uk (Signalspannung) an den Schleiferkontakt S gelegt respektive aufgetastet. Die Steuereinheit 2 weist eine elektronische Auswerteeinheit 3 auf, welche mit dem Schleiferkontakt S verbunden ist. Aus der mit Hilfe der Auswerteeinheit 3 der Steuereinheit 2 gemessen Spannung Us am Schleiferkontakt S respektive aus den Spannungsveränderungen Delta Us der Spannung Us wird eindeutig ermittelt, ob sich der Schleiferkontakt S konkret im Hauptstellbereich A-E1 zur Vorgabe einer Hauptfunktion oder im Sonderfunktionsbereich respektive im Stellbereich zur Vorgabe mindestens einer Sonderfunktion A-E2 befindet.

Die Spannungen Us am Schleiferkontakt S werden gegenüber der gemeinsamen Anfangsposition A der beiden Widerstandsbahnen R_{A-E1} und R_{A-E2}, die gleichzeitig auch das Massepotential M der Steuereinheit 2 ist, gemessen.

Hauptunterscheidungsmerkmal hinsichtlich der jeweils erfassten Spannungsänderungen Delta Us am Schleiferkontakt S ist, dass, wenn sich der Schleiferkontakt S im Hauptstellbereich A-E1 zur Vorgabe einer Hauptfunktion befindet, dem stationären Strom I_{E1-A} = Uᵥ / R_{A-E1} im Widerstandszweig R_{b} ein von der Steuereinheit 2 abgegebener Signalstrom Is zeitweise überlagert wird und hierdurch ausgehend von einem Spannungswert Us eine Spannungserhöhung Delta Us am Schleiferkontakt S auftritt. Während der Zeitspannen, während der der stationäre Strom I_{E1-A} nicht vom Signalstrom Is überlagert wird, stellt sich am Schleiferkontakt S die dem Widerstandsverhältnis R_{b} / R_{A-E1} entsprechende Spannung Us ein, die gleichzeitig als Vorgabewert für den Hauptstellbereich herangezogen wird. Die Diode D verhindert hier, dass während dieser Zeitspannen der Spannungsteiler belastet wird.

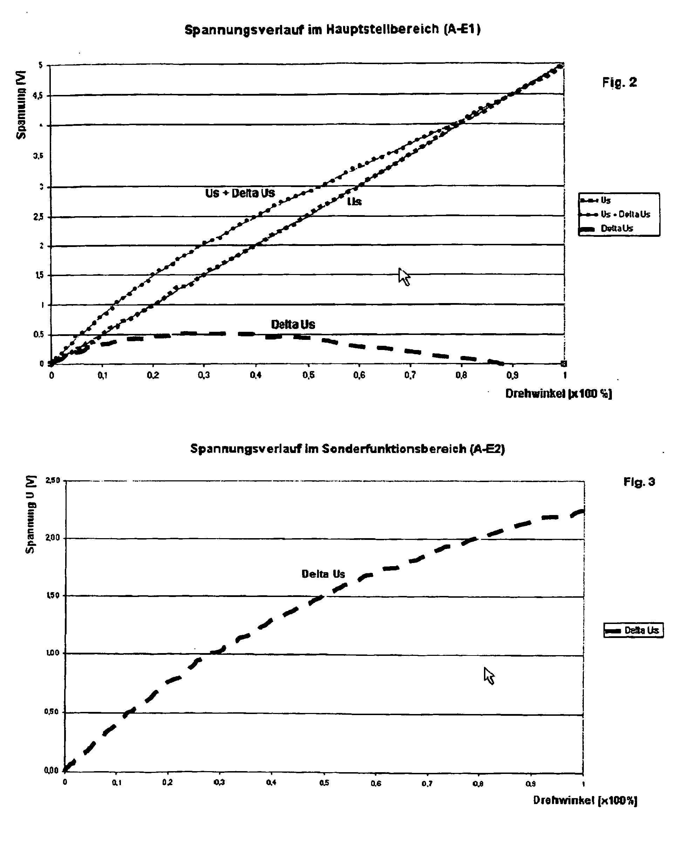

**Fig. 2** zeigt die interessierende Spannungsverläufe im Hauptstellbereich A-E1 in Abhängigkeit des Drehwinkels des Schleiferkontakts, d. h. den grundsätzlichen Verlauf der Spannung Us am Schleiferkontakt, den Verlauf der Spannungsveränderungen Delta Us und den Verlauf der Summenspannung Us + Delta Us; beispielhaft ausgehend von einer Versorgungsspannung Uv von 5V und einer kodierten Spannung Uk von 5 V bei gleichen Widerstandswerten R_{A-E1} = Rᵥ.

**Fig. 4** zeigt korrespondierend zu den Spannungsverläufen gemäß **Fig. 2** den interessierenden Verlauf des von der Steuereinheit abgegebenen Stromes Is seitens der kodierten Spannung Uk im Hauptstellbereich A-E1. Der Strom Is verläuft von der Steuereinheit 2 über die Diode D, den Vorwiderstand Rv, den Schleiferkontakt S, den Widerstandszweig R_{b} des Hauptstellbereichs A-E1 zum Anschluss A / Massepotential M.

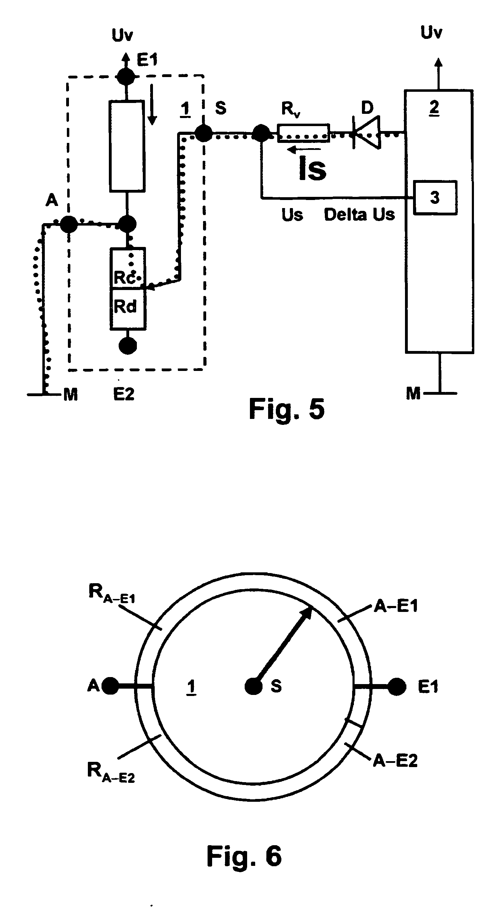

Befindet sich der Schleiferkontakt S dagegen im Sonderfunktionsbereich respektive im Stellbereich zur Vorgabe mindestens einer Sonderfunktion A-E2, so wird die sonst stromlose zweite Widerstandsbahn R_{A-E2} von der Steuereinheit 2 über die Diode D, den Vorwiderstand Rᵥ, und den Schleiferkontakt S, den Widerstandszweig R_{c} zum Anschluss A / Massepotential M seitens der kodierten Spannung Uk zeitweise mit dem Strom Is versorgt. **Fig. 5** zeigt korrespondierend zum Spannungsverlauf gemäß **Fig. 3** den interessierenden Verlauf dieses von der Steuereinheit 2 abgegebenen Stromes Is im Sonderfunktionsbereich A-E2.

Dabei stellt sich am Schleiferkontakt S eine Spannung entsprechend dem Widerstandsverhältnis R_{c}/(R_{c}+Rᵥ) ein. Diese Spannung beträgt im vorliegenden Fall bei den beispielhaft angegebenen Spannungen (siehe die Hinweise zur **Fig. 2**) je nach Stellung des Schleiferkontaktes 0V bis ca. 2,3 V. Während der Zeitspannen, während der die kodierte Spannung Uk nicht aufgetastet wird, liegen definiert immer 0 V am Schleiferkontakt S an. **Fig. 3** zeigt den grundsätzlichen Spannungsverlauf Delta Us im Sonderfunktionsbereich in Abhängigkeit des Drehwinkels des Schleiferkontakts; ausgehend von einer kodierten Spannung Uk von 5V bei gleichen Widerstandswerten R_{A-E2} = Rᵥ.

Hauptunterscheidungsmerkmal für die Steuerung / Auswertung mit Hilfe der Steuereinheit 2 und der Auswerteeinheit 3 ist somit,
- dass im Hauptstellbereich A-E1 zur Vorgabe einer Hauptfunktion eine Veränderung der Spannung Us am Schleiferkontakt S respektive eine Spannungserhöhung entsprechend der Spannungsveränderungen Delta Us detektierbar ist, ausgehend von einem vorhandenen Wert Us, der größer Null ist (Us>0) und
- dass im Sonderfunktionsbereich respektive Stellbereich A-E2 zur Vorgabe mindestens einer Sonderfunktion eine Veränderung der Spannung am Schleiferkontakt S respektive eine Spannungserhöhung entsprechend der Spannungsveränderungen Delta Us detektierbar ist, ausgehend vom Wert Null (Us=0).

Befindet sich der Schleiferkontakt S in der Anfangsposition A, so ist der vorhandene Wert der Spannung Us gleich Null (Us=0) und es tritt keine Spannungserhöhung seitens der Spannungsveränderungen Delta Us auf. Es sind somit seitens der Auswerteeinheit 3 alle unterschiedlichen Stellungen des Schleiferkontaktes S eindeutig zuordenbar.

Steuereinheit 2 und Auswerteeinheit 3 können dabei getrennte Baueinheiten sein, können aber auch in einem gemeinsamen Bauteil, beispielsweise in einem µ-Controller, integriert sein. In letzterem Fall kann dann die kodierte Spannung Uk über einen der Ausgänge des µ-Controllers erzeugt werden, während die Auswerteeinheit 3 aus einem Analog-Digital-Wandler und der zugehörigen Softwareauswertung besteht.

**Fig**. 6 zeigt den Hauptstellbereich A-E1 mit der ersten Widerstandsbahn R_{A-E1} und den Sonderfunktionsbereich A-E2 mit der zweiten Widerstandsbahn R_{A-E2} bei einem in Form eines Drehpotentiometers ausgeführten Potentiometer 1, wobei die Widerstandsbahn R_{A-E1} einen Schleifer-Drehwinkel von 180° des Schleiferkontakt S und die Widerstandsbahn R_{A-E2} einen Schleifer-Drehwinkel von kleiner 180° des Schleiferkontakt S ermöglicht. Demgemäß liegen sich die beiden Anschlüsse A und E1 diametral gegenüber.

Grundsätzlich können die Bereiche Hauptstellbereich zur Vorgabe einer Hauptfunktion und Sonderfunktionsbereich respektive Stellbereich zur Vorgabe mindestens einer Sonderfunktion auch invertiert zugeordnet werden.

Der Sonderfunktionsbereich respektive Stellbereich zur Vorgabe mindestens einer Sonderfunktion kann aus einer einzigen Sonderfunktion oder mehreren Sonderfunktionen bestehen.

Die dem Schleiferkontakt S zugeführte kodierte Spannung respektive Signalspannung Uk kann unterschiedliche Kodierungen haben beispielsweise
- aufgetastete Gleichspannung,
- aufgetastete Wechselspannung,
- aufgetastete unterschiedliche Polarität usw.

Während das Potentiometer 1 als solches lediglich drei Anschlüsse aufweist, nämlich die Widerstandsbahn-Endposition E1 der ersten Widerstandsbahn R_{A-E1}, die Widerstandsbahn-Anfangsposition A der beiden Widerstandsbahnen R_{A-E1} und R_{A-E2} und den Schleiferkontakt S, können optional zusätzliche Taster-Anschlüsse für zusätzliche Signalströme integriert sein, um damit Vorortbedienungen vornehmen zu können.

Selbstverständlich muss das Potentiometer nicht zwingend in Form eines Drehpotentiometers ausgebildet sein. Alternativ ist auch eine Ausbildung mit translatorisch verschiebbarem Schleiferkontakt realisierbar.

### Bezugszeichenliste

- 1: Potentiometer
- 2: Steuereinheit (z. B. Mikrocontroller)
- 3: elektronische Auswerteeinheit

- A-E1: Hauptstellbereich zur Vorgabe einer Hauptfunktion
- A-E2: Stellbereich zur Vorgabe mindestens einer Sonderfunktion (Sonderfunktionsbereich)
- A: Widerstandsbahn-Anfangsposition = erster Anschluss des Potentiometers
- D: Diode
- E1: Widerstandsbahn-Endposition der ersten Widerstandsbahn = zweiter Anschluss des Potentiometers
- E2: Widerstandsbahn-Endposition der zweiten Wderstandsbahn
- Is: von der Steuereinheit abgegebener Signalstrom
- I_{E1-A}: stationärer Strom
- M: Massepotential, Bezugspunkt
- R_{A-E1}: erste Widerstandsbahn
- R_{A-E2}: zweite Widerstandsbahn
- Rₐ: Widerstandszweig
- R_{b}: Widerstandszweig
- R_{c}: Widerstandszweig
- R_{d}: Widerstandszweig
- Rᵥ: Vorwiderstand
- S: Schleiferkontakt (Schleiferstellung, Schleifer-Stellwinkel) = dritter Anschluss des Potentiometers
- Uk: kodierte Spannung (Signalspannung)
- Us: Spannung am Schleiferkontakt
- Delta Us: Spannungsveränderungen der Spannung Us am Schleiferkontakt
- Uv: Versorgungsspannung (Gleichspannung)

## Patentansprüche

1. Potentiometer (1) mit zwei örtlich getrennten, intern in Serie geschalteten Widerstandsbahnen (R_{A-E1}, R_{A-E2}),
• wobei die erste Widerstandsbahn (R_{A-E1}) einen Hauptstellbereich (A-E1) zur Vorgabe einer Hauptfunktion bildet und die zweite Widerstandsbahn (R_{A-E2}) einen Sonderfunktionsbereich (A-E2) respektive einen Stellbereich zur Vorgabe mindestens einer Sonderfunktion bildet,
• wobei der gemeinsame Verbindungspunkt der beiden Widerstandsbahnen (R_{A-E1}, R_{A-E2}) eine Widerstands-Anfangsposition (A) und gleichzeitig einen ersten Anschluss des Potentiometers (1) bildet,
• wobei das weitere Ende der ersten Widerstandsbahn (R_{A-E1}) eine Widerstands-Endposition (E1) und gleichzeitig einen zweiten Anschluss des Potentiometers (1) bildet,
**dadurch gekennzeichnet, dass**
• das weitere Ende der zweiten Widerstandsbahn (R_{A-E2}) eine offen liegende, extern nicht zu beschaltende Widerstands-Endposition (E2) bildet,
• sowohl der Hauptstellbereich (A-E1) als auch der Sonderfunktionsbereich (A-E2) von einem einen dritten Anschluss des Potentiometers (1) bildenden Schleiferkontakt (S) Kontaktierbar sind respektive durchfahrbar sind,
• so dass das Potentiometer (1) als solches lediglich drei Anschlüsse aufweist, nämlich die Widerstandsbahn-Endposition (E1) der ersten Widerstandsbahn (R_{A-E1}), die Widerstandsbahn-Anfangsposition (A) der beiden Widerstandsbahnen (R_{A-E1} und R_{A-E2}) und den Schleiferkontakt (S),
• so dass je nach Schleiferstellung die erste oder die zweite Widerstandsbahn (R_{A-E1}, R_{A-E2}) in zwei Widerstandszweige (R_{a,} R_{b,} R_{c,} R_{d}) aufteilbar ist.

2. Potentiometer nach Anspruch 1, **dadurch gekennzeichnet, dass** das Potentiometer (1) als Drehpotentiometer ausgebildet ist.

3. Potentiometer nach Anspruch 1 oder 2, **dadurch gekennzeichnet, dass** zu den drei Anschlüssen zusätzliche Taster-Anschlüsse integriert sind.

4. Steuerung / Auswertung zum Potentiometer (1) mit Hauptstellbereich (A-E1) und Sonderfunktionsbereich (A-E2) nach mindestens einem der vorstehenden Ansprüche, **dadurch gekennzeichnet,**
• **dass** eine Versorgungsspannung (Uv) zwischen den ersten und den zweiten Anschluss (A, E1) angelegt ist,
• **dass** mittels einer Steuereinheit (2) über eine Diode (D) und einen Vorwiderstand (Rᵥ) eine kodierte Spannung (Uk) zwischen dritten und ersten Anschluss (S, A) angelegt ist und
• **dass** eine elektronische Auswerteeinheit (3) die Spannung (Us) am Schleiferkontakt (S) gegenüber dem ersten Anschluss (A) sowie die Spannungsveränderungen (Delta Us) dieser Spannung erfasst.

5. Steuerung / Auswertung nach Anspruch 4, **dadurch gekennzeichnet, dass** die Versorgungsspannung (Uv) eine Gleichspannung ist.

6. Steuerung / Auswertung nach Anspruch 4, **dadurch gekennzeichnet, dass** die kodierte Spannung (Uk) eine aufgetastete Gleichspannung ist.

7. Steuerung / Auswertung nach Anspruch 4, **dadurch gekennzeichnet, dass** die kodierte Spannung (Uk) eine aufgetastete Wechselspannung ist.

## Claims

1. A potentiometer (1), comprising two locally separate resistance tracks (R_{A-E1}, R_{A-E2}) which are switched internally in series,
- with the first resistance track (R_{A-E1}) forming a main adjusting range (A-E1) for predetermining a main function, and the second resistance track (R_{A-E2}) forming a special functional range (A-E2) or an adjusting range for predetermining at least one special function;
- with the common connecting point of the two resistance tracks (R_{A-E1}, R_{A-E2}) forming an initial resistance position (A) and simultaneously a first connection of the potentiometer (1);
- with the further end of the first resistance track (R_{A-E1}) forming a resistance end position (E1) and simultaneously a second connection of the potentiometer (1), **characterized in that**
- the further end of the second resistance track (R_{A-E2}) forms an exposed resistance end position (E2) which is not to be connected externally;
- both the main adjusting range (A-E1) and the special functional range (A-E2) can be contacted or traversed by a slider contact (S) forming a third connection of the potentiometer (1),
- so that the potentiometer (1) per se merely comprises three connections, which are the resistance track end position (E1) of the first resistance track (R_{A-E1}), the resistance track starting position (A) of the two resistance tracks (R_{A-E1} and R_{A-E2}) and the slider contact (S),
- so that depending on the slider position the first or the second resistance track (R_{A-E1}, R_{A-E2}) can be divided into two resistance branches (Rₐ, R_{b}, R_{c}, R_{d}).

2. A potentiometer according to claim 1, **characterized in that** the potentiometer (1) is arranged as a rotary potentiometer.

3. A potentiometer according to claim 1 or 2, **characterized in that** additional key button connections are integrated in addition to the three connections.

4. A control / evaluation for the potentiometer (1) with main adjusting range (A-E1) and a special functional range (A-E2) according to at least one of the preceding claims, **characterized in that**
- a supply voltage (Uv) is applied between the first and second connection (A, E1);
- a coded voltage (Uk) is applied between the third and first connection (S, A) by means of a control unit (2) via a diode (D) and a series resistor (Rv), and
- an electronic evaluation unit (3) detects the voltage (Us) at the slider contact (S) in relation to the first connection (A) and the change in voltage (delta Us) of this voltage.

5. A control / evaluation according to claim 4, **characterized in that** the supply voltage (Uv) is a direct voltage.

6. A control / evaluation according to claim 4, **characterized in that** the coded voltage (Uk) is a gated direct voltage.

7. A control / evaluation according to claim 4, **characterized in that** the code voltage (Uk) is a gated alternating voltage.

## Revendications

1. Potentiomètre (1) avec deux pistes résistantes (R_{A-E1}, R_{A-E2}) montées en série en interne,
• dans lequel la première piste résistante (R_{A-E1}) forme une zone de réglage principale (A-E1) pour spécifier une fonction principale et la deuxième piste résistante (R_{A-E2}) forme une zone de fonction spéciale (A-E2) ou une zone de réglage pour spécifier au moins une fonction spéciale ;
• dans lequel le point de connexion commun des deux pistes résistantes (R_{A-E1}, R_{A-E2}) forme une position résistante initiale (A) et en même temps une première connexion du potentiomètre (1) ;
• dans lequel l'autre extrémité de la première piste résistante (R_{A-E1}) forme une position résistante finale (E1) et en même temps une deuxième connexion du potentiomètre (1),
**caractérisé en ce que**
• l'autre extrémité de la deuxième piste résistante (R_{A-E2}) forme une position résistante finale (E2) ouverte, non destinée à être connectée de l'extérieur ;
• la zone de réglage principale (A-E1) aussi bien que la zone de fonction spéciale (A-E2) peuvent être mises en contact ou traversées par un contact frotteur (S) formant une troisième connexion du potentiomètre (1),
• de sorte que le potentiomètre (1) en tant que tel présente seulement trois connexions, à savoir la position finale de piste résistante (E1) de la première piste résistante (R_{A-E1}), la position initiale de piste résistante (A) des deux pistes résistantes (R_{A-E1} et R_{A-E2}) et le contact frotteur (S),
• de sorte que selon la position du frotteur, la première piste résistante ou la deuxième (R_{A-E1}, R_{A-E2}) peut être partagée en deux branches résistantes (Rₐ, R_{b}, R_{c}, R_{d}).

2. Potentiomètre selon la revendication 1, **caractérisé en ce que** le potentiomètre (1) est conçu comme un potentiomètre rotatif.

3. Potentiomètre selon la revendication 1 ou 2, **caractérisé en ce que** des connexions de boutons supplémentaires sont intégrées en plus des trois connexions.

4. Commande et interprétation pour le potentiomètre (1) avec zone de réglage principale (A-E1) et zone de fonction spéciale (A-E2) selon l'une au moins des revendications précédentes, **caractérisées en ce que**
• une tension d'alimentation (Uv) est appliquée entre la première connexion et la deuxième (A, E1) ;
• **en ce qu'**une tension codée (Uk) est appliquée au moyen d'une unité de commande (2) par l'intermédiaire d'une diode (D) et d'une résistance série (Rᵥ) entre la troisième connexion et la première (S, A); et
• **en ce qu'**une unité d'interprétation électronique (3) capte la tension (Us) sur le contact frotteur (S) vis-à-vis de la première connexion (A) et les changements de tension (Delta Us) de cette tension.

5. Commande et interprétation selon la revendication 4, **caractérisées en ce que** la tension d'alimentation (Uv) est une tension de courant continu.

6. Commande et interprétation selon la revendication 4, **caractérisées en ce que** la tension codée (Uk) est une tension de courant continu déclenchée.

7. Commande et interprétation selon la revendication 4, **caractérisées en ce que** la tension codée (Uk) est une tension de courant alternatif balayée.
